(19)

Europäisches
Patentamt
European
Patent Office
Office européen
des brevets

(11) **EP 2 905 256 A1**

(12) **EUROPEAN PATENT APPLICATION**
published in accordance with Art. 153(4) EPC

(43) Date of publication:
**12.08.2015 Bulletin 2015/33**

(21) Application number: **13843530.0**

(22) Date of filing: **20.09.2013**

(51) Int Cl.:
***C01B 31/04*** *(2006.01)*

(86) International application number:
**PCT/JP2013/075505**

(87) International publication number:
**WO 2014/054441 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.10.2012 JP 2012221182**
**03.10.2012 JP 2012221183**

(71) Applicant: **Sekisui Chemical Co., Ltd.**
**Osaka 530-8565 (JP)**

(72) Inventors:
• **FUJIWARA, Akihiko**
**Mishima-gun**
**Osaka 618-0021 (JP)**

• **NAKASUGA, Akira**
**Mishima-gun**
**Osaka 618-0021 (JP)**
• **NOZATO, Shoji**
**Mishima-gun**
**Osaka 618-0021 (JP)**
• **YOSHITANI, Hiroshi**
**Mishima-gun**
**Osaka 618-0021 (JP)**

(74) Representative: **Ter Meer Steinmeister & Partner**
**Patentanwälte mbB**
**Postfach 86 07 69**
**81634 München (DE)**

(54) **METHOD FOR MANUFACTURING EXPANDED GRAPHITE AND METHOD FOR MANUFACTURING FLAKE GRAPHITE**

(57) There is provided a method for producing expanded graphite that allows mass-producing graphene, exfoliated graphite, or the like safely and efficiently. A method for producing expanded graphite, comprising a first step of bringing a complex of a compound serving as a charge acceptor for graphite into contact with raw material graphite in a hydrophobic solvent; and a second step of bringing the raw material graphite in contact with the complex into contact with a polar solvent after the first step.

Printed by Jouve, 75001 PARIS (FR)

**Description**

Technical Field

The present invention relates to a method for producing expanded graphite from graphite by a solvent method, and a method for producing exfoliated graphite using the method for producing expanded graphite.

Background Art

Graphene has excellent toughness, electrical conductivity, thermal conductivity, and heat resistance. Therefore, various methods for producing exfoliated graphite having a smaller number of stacked layers of graphene than the original raw material graphite are proposed.

As methods for mass-producing graphene or exfoliated graphite, methods of making GICs (Graphite intercalation compounds) from graphite and exfoliating the GICs between the graphene layers of the GICs are known. As methods for obtaining such GICs, 1) a two-bulb method, 2) a liquid phase contact reaction method (mixing method), 3) a solid phase pressurization method, 4) a solvent method, 5) an electrochemical method, and the like are proposed.

For example, in 4) the solvent method, a compound such as an alkali metal-aromatic hydrocarbon (naphthalene or biphenyl) is mixed with a solvent in THF (tetrahydrofuran), DME (dimethoxyethane), or the like to form a complex. Next, graphite is introduced to form a metal-THF-graphite ternary GIC.

However, the GIC obtained by this method is the so-called donor type GIC. In the donor type GIC, an intercalant serving as a charge transfer donor for graphite is inserted. As the intercalant that can be used, a compound of a metal such as an alkali metal is used. Therefore, the obtained GIC is highly reactive with moisture and oxygen in air. Therefore, a special apparatus for avoiding reactions with moisture and oxygen in air must be used.

One example of such a production method is disclosed in the following Patent Literature 1. Patent Literature 1 discloses a method of making graphene or exfoliated graphite by mechanically dispersing a GIC using an alkali metal in a particular solvent.

On the other hand, Patent Literature 2 discloses a method of making an acceptor type GIC at a low temperature of 200°C or lower without using a halogen gas by reacting a metal halide with graphite in a solvent comprising an aliphatic halide, an aromatic halide, and an aromatic nitro compounds.

In addition, the following Non Patent Literature 1 discloses a method of dissolving a metal halide such as iron chloride or aluminum chloride serving as an acceptor for an aromatic compound in a solvent such as nitromethane or thionyl chloride and immersing with graphite. According to this method, an acceptor type GIC can be made by a solvent method.

Citation List

Patent Literature

Patent Literature 1: National Publication of International Patent Application No. 2010-535690
Patent Literature 2: Japanese Patent Laid-Open No. 2011-144054

Non Patent Literature

Non Patent Literature 1: D. Ginderow, R. Setton, C. R. Acad. Sci. Palis 257, 687 (1963)

Summary of Invention

Technical Problem

As described above, in the conventional method for producing graphene or exfoliated graphite from the so-called donor type GIC, a special apparatus for avoiding reactions with moisture and oxygen in air must be used. In addition, problems are that a dangerous solvent is used, and the danger in process control is high. Therefore, graphene or exfoliated graphite cannot be mass-produced safely and efficiently from the GIC.

On the other hand, Patent Literature 2 and Non Patent Literature 1 report a method for obtaining an acceptor type GIC by a solvent method but do not show a method for producing graphene or exfoliated graphite from an acceptor type GIC.

It is an object of the present invention to provide a method for producing expanded graphite that allows mass-producing graphene, exfoliated graphite, or the like safely and efficiently.

It is another object of the present invention to provide a method for producing exfoliated graphite using the above method for producing expanded graphite.

Solution to Problem

The inventors in this application have studied diligently in order to achieve the above objects, and, as a result, found that when a complex of a compound serving as a charge acceptor for graphite is brought into contact with raw material graphite in a hydrophobic solvent and then brought into contact with a polar solvent, expanded graphite having high swelling properties can be formed, thereby making the present invention.

A method for producing expanded graphite according to the present invention comprises a first step of bringing a complex of a compound serving as a charge acceptor for graphite into contact with raw material graphite in a hydrophobic solvent; and a second step of bringing the raw material graphite in contact with the complex into contact with a polar solvent after the first step.

In the first step, it is possible to form the complex of the compound serving as a charge acceptor for graphite in the hydrophobic solvent and bring the complex into contact with the raw material graphite in the first step. As another method, it is possible to previously introduce the complex of the compound serving as a charge acceptor for graphite into the hydrophobic solvent, dissolve the complex, and introduce the raw material graphite simultaneously or subsequently to bring the complex into contact with the raw material graphite.

The expanded graphite refers to a GIC in which an intercalant is inserted between graphene layers, or a graphite compound in a state in which layers are highly spaced via the GIC. The above intercalant is inserted between the graphene layers, and therefore, the distance between the graphene layers is increased. By performing mechanical treatment or the like, the expanded graphite can be easily exfoliated between the graphene layers of the expanded graphite. Therefore, graphene or exfoliated graphite can be easily formed.

A method for producing exfoliated graphite according to the present invention is characterized by performing exfoliation treatment on expanded graphite obtained by the method for producing expanded graphite according to the present invention. In the expanded graphite obtained by the present invention, an intercalant is inserted between graphene layers as described above, and by performing the above exfoliation treatment, exfoliated graphite can be easily obtained.

The details of the present invention will be described below.

(Complex of Compound Serving as Charge Acceptor for Graphite)

The compound serving as a charge acceptor for graphite used in the present invention is not particularly limited. Examples of the compound include the following (1) metal halides represented by MXn (wherein M is a metal of groups 2 to 7 of the periodic table, X is a halogen, and n is an integer of 2 to 5), (2) composite salts represented by MAX, (3) complex compounds represented by ML or MLX, (4) organic compounds, and (5) trivalent phosphorus compounds.

(1) Metal Halides Represented by MXn:

The above M is a metal of groups 2 to 7 of the periodic table. Examples of such a metal include beryllium, boron, magnesium, aluminum, silicon, calcium, scandium, titanium, vanadium, chromium, manganese, iron, cobalt, nickel, zinc, gallium, strontium, yttrium, zirconium, niobium, molybdenum, technetium, ruthenium, rhodium, palladium, silver, cadmium, indium, tin, antimony, hafnium, tantalum, tungsten, rhenium, osmium, iridium, platinum, gold, mercury, thallium, lead, and bismuth.

The above X is a halogen and is fluorine, chlorine, bromine, or iodine.

The above n is an integer of 2 to 5 according to the valence of the metal.

Preferred examples of the above MXn can include copper chloride, iron chloride, zinc chloride, and aluminum chloride in which X is chlorine. Metal chlorides are preferred because they are inexpensive and have relatively low toxicity.

The metal halides represented by MXn may be metal halides comprising a plurality of halogens like $MX_1X_2$. In this case, $X_1$ and $X_2$ are halogen elements, but $X_1$ and $X_2$ are different halogen elements.

(2) In addition, composite salts of acids, halogens, and metals represented by MAX when A is an acid may be used. M is a metal element of group 2 to group 7 of the periodic table as described above. A is an acid. The acid may be an inorganic acid such as sulfuric acid, nitric acid, phosphoric acid, or boric acid or an organic acid.

Further, (3) the complex compounds represented by ML or MLX may be used.

Here, M is a metal element of group 2 to group 7. L is a compound serving as a ligand such as acetylacetone, ethylenediamine, phthalocyanine, ammonia, carbon monoxide, or cyanogen. X is as described above.

Among the complex compounds represented by ML or MLX, MLX is preferred, and more preferably, complex compounds represented by MLaXb are desired. Here, a and b are each an integer of 1 to 4.

(4) Acceptor Comprising Organic Compound

As the above organic compounds serving as a charge acceptor, for example, organic compounds having the ability to form a CT complex with an aromatic compound such as p-benzoquinone, 2,3,5,6-tetramethyl-p-benzoquinone, 2-methyl-1,4-naphthoquinone, tetrafluoro-1,4-benzoquinone, 7,7,8,8-tetracyanoquinodimethane, and 2-cyanopyridine can be used.

(5)

Trivalent Phosphorus Compounds

Examples of the trivalent phosphorus compounds can include triphenyl phosphite and trialkyl phosphites.

In the present invention, preferably, as the above compound serving as a charge acceptor for graphite, compounds having the structure of the above MXn or compounds having the structure of MLaXb are preferably used. In this case, expanded graphite can be easily produced using a two-stage immersion method in which these compounds are immersed in a first solvent that is a hydrophobic solvent and immersed in a second solvent that is a polar solvent. In addition, expanded graphite in which the space between graphene layers are sufficiently increased can be obtained. Therefore, exfoliated graphite or graphene can be easily mass-produced by various exfoliation treatments described later. The above MXn or MLaXb can also be left on the graphite surface. In this case, the solvent dispersibility can also be increased by selecting MXn or MLaXb.

(Hydrophobic Solvent)

Preferred examples of the hydrophobic solvent used in the above first step include solvents that can form a CT complex with the above aromatic compound serving as a charge acceptor, or hydrophobic solvents containing a compound that forms a CT complex with the above compound.

Whether or not forming a CT complex with the above compound serving as a charge acceptor can be confirmed by an optical absorption spectrum. In other words, whether or not a CT complex is formed can be qualitatively determined by whether or not absorption specific to the CT complex referred to as a CT band appears in the long wavelength region at the time of mixing. Examples of a solvent such that the solvent itself forms a CT complex with the above compound serving as a charge acceptor include solvents comprising aromatic compounds such as benzene, toluene, phenoxytoluene, diphenyl ether, methoxytoluene, xylene, and tetralin, aromatic halides such as chlorobenzene and dichlorobenzene, aromatic nitro compounds such as nitrobenzene and nitrotoluene, aliphatic halides such as chloroform, dichloromethane, and bromoethane, and aliphatic nitrogenated compounds such as acrylonitrile and nitroethane, and mixtures thereof.

In addition, as the above hydrophobic solvent, a mixed solvent of a solvent that itself forms a CT complex with the compound serving as a charge acceptor and another solvent having no CT complex-forming ability may be used. Examples of the another solvent having no CT complex-forming ability can include normal alkanes and cycloalkanes. In addition, as the above another solvent, organic halogen-based solvents such as methyl chloride, methyl dichloride, ethylene dichloride, methylene diiodide, and ethylene dibromide may be used.

Further, the solvents that can form a CT complex with the above compound serving as a charge acceptor may be hydrophobic solvents comprising an aromatic compound having a substituted functional group such as an alkylbenzene.

In addition, solvents having no alcoholic hydroxyl group such as methyl ethyl ketone and diethyl ether may be used. Such solvents have low CT complex-forming ability but can be used in the present invention.

The solubility parameter of the above hydrophobic solvent is preferably 12 $(cal/cm^3)^{1/2}$ or less (the unit is omitted hereinafter). It is desired that the solubility parameter is more preferably 11.5 or less, particularly preferably 10.5 or less. The solubility parameter can be calculated by the methods of Small, Fedors, Hansen, and the like, and the solubility parameter in the present invention refers to an SP value by Fedors. Examples of solvents having a solubility parameter of 12 or less can include benzene, toluene, phenoxytoluene, diphenyl ether, methoxytoluene, ethylbenzene, xylene, chlorobenzene, dichlorobenzene, nitrobenzene, nitrotoluene, chloroform, dichloromethane, acrylonitrile, nitroethane, nitromethane, methyl ethyl ketone, diethyl ketone, benzaldehyde, di-n-butyl phosphate, and dibutyl phthalate as described in various literatures.

As the above hydrophobic solvent, styrene, divinylbenzene, and the like in which a vinyl group is bonded to a benzene ring may be used.

Further, unsaturated hydrocarbons such as limonene, pinene, phellandrene, carene, butadiene, norbornene, and fluorene in which part of an alkane or cycloalkane is a double bond can also be used.

Examples of other embodiments of the hydrophobic solvent used in the first step of the present invention include a solution obtained by dissolving in a solvent a compound B that forms a CT complex with the above compound serving as a charge acceptor. As the above solvent, inert solvents may be used, or the above solvent in which the solvent itself forms a CT complex with the compound serving as a charge acceptor may be used.

The compound B that forms a CT complex with the compound serving as an acceptor is referred to as the compound B having CT complex-forming ability.

The above compound B having CT complex-forming ability may be a compound that itself constitutes a hydrophobic solvent having CT complex-forming ability. In addition, the above compound B may be an aromatic compound such as naphthalene, biphenyl, anthracene, phenanthrene, or pyrene that is in a solid state.

Examples of the above inert solvents can include cycloalkane-, normal alkane-, and halogenated carbon-based solvents.

The hydrophobic solvent used in the above first step should dissolve the above compound serving as a charge acceptor. Therefore, a hydrophobic solvent having interaction with the above compound serving as a charge acceptor to some extent is desired, and the hydrophobic solvent preferably does not have strong ionic interaction. When a hydrophobic solvent that performs strong interaction such as a hydrogen bond or an ionic bond is used, the ligand of the formed complex cannot undergo a ligand substitution reaction with an aromatic having an SP2 bond between the graphene layers. Therefore, the formation of a GIC, that is, the formation of expanded graphite, may not proceed. Therefore, the above hydrophobic solvent desirably does not perform strong ionic interaction with the compound serving as a charge acceptor. For example, nitromethane and the like perform strong interaction with the compound serving as a charge acceptor, but the nitromethane is a dangerous solvent handled with care. In the present invention, it is preferred not to use such a solvent having very strong interaction with the compound serving as a charge acceptor, and thus, the safety of the production process can be increased.

Preferred examples of the solvent used in the present invention can include toluene, phenoxytoluene, diphenyl ether, methoxytoluene, and MEK.

(Raw Material Graphite)

In the present invention, the above complex formed is brought into contact with the raw material graphite in the first step. Examples of the raw material graphite that can be used can include natural graphite, artificial graphite, thermally expanded graphite, and HOPG. The HOPG (highly oriented pyrolytic graphite) is a highly oriented graphite crystal made by vapor-phase growing a hydrocarbon gas. The thermally expanded graphite refers to graphite in which the distance between the graphene layers of graphite is increased by heat treatment. Such thermally expanded graphite is available from AIR WATER INC., SUZUHIRO CHEMICAL CO., LTD., and the like.

In addition, fibrous materials having a graphene structure like carbon fibers can also be used as the raw material graphite. In other words, the form of the raw material graphite is not particularly limited.

(Embodiment of First Step)

In the first step, the complex of the above compound serving as a charge acceptor is brought into contact with the raw material graphite in the above hydrophobic solvent. Examples of this operation include a method of forming the complex in the hydrophobic solvent with the compound serving as a charge acceptor, and bringing the complex into contact with the raw material graphite. In this case, the raw material graphite may be brought into contact with the complex after complex formation. In other words, after the complex of the above compound serving as a charge acceptor is formed in the hydrophobic solvent, the raw material graphite may be introduced into the hydrophobic solvent to bring the complex into contact with the raw material graphite.

As another method of the first step, a method of introducing the complex of the above compound serving as a charge acceptor into the above hydrophobic solvent, dissolving it, and further introducing the raw material graphite simultaneously or later may be used.

When the complex and the raw material graphite are brought into contact with each other, preferably, heating is performed. The insertion of the above compound serving as a charge acceptor between the graphene layers of the raw material graphite is promoted by heating. In other words, the rate of intercalation can be increased.

The temperature may be lower than the boiling point of the hydrophobic solvent. However, the temperature is preferably high and is desirably a temperature higher than normal temperature, and thus, the rate of intercalation can be increased.

In the above first step, from the complex of the compound serving as a charge acceptor, the compound serving as a charge acceptor is inserted between the layers of graphene. In this manner, expanded graphite is formed in the hydrophobic solvent. However, in the expanded graphite obtained in the first step, the distance between the layers of graphene is not much increased. This point will be described later. The expanded graphite obtained in the first step can be separated from the above hydrophobic solvent by filtration or centrifugation. When having a sheet shape or a three-dimensional shape, the above expanded graphite may be removed from the solvent as it is. The remaining compound serving as a charge acceptor and other ligand compounds not inserted into the graphite are desirably removed by washing.

When the XRD spectrum of the expanded graphite obtained as described above is measured, it is found that the distance between the graphene layers is not sufficiently increased. However, the distance between the graphene layers is sufficiently increased by the second step described later, and expanded graphite in which exfoliated graphite or graphene can be easily exfoliated can be obtained according to the method for producing expanded graphite according to the present invention.

(Second Step)

In the present invention, the second step is performed after the first step, and the graphite material after the first step is brought into contact with the polar solvent. In other words, the raw material graphite in contact with the above complex, that is, the graphite material in which the compound serving as a charge acceptor is intercalated, is brought into contact with the polar solvent

In the above second step, the space between graphene layers can be further increased. Therefore, by performing exfoliation treatment, exfoliated graphite can be easily obtained. Here, the polar solvent is not particularly limited, and various solvents can be used.

However, preferably, solvents having a solubility parameter of more than 12 and having a solubility parameter as high as possible are desirably used. Thus, the distance between the graphene layers can be increased more effectively.

Examples of the above polar solvents having a solubility parameter of more than 12 include γ-butyrolactone, propylene-1,2-carbonate, methylpyrrolidone, dimethylformamide, dimethyl sulfoxide, ethanol, furfuryl alcohol, benzyl alcohol, ethylene glycol monomethyl ether, acetic acid, and propylene glycol.

Preferably, the solubility parameter is desirably 12.5 or more and is more preferably 14 or more.

Solvents having a solubility parameter of 12.5 or more include propylene carbonate, nitromethane, pyrrolidone, and ethanol.

Further, examples of polar solvents having a solubility parameter of 14 or more include water, ethylene glycol, glycerin, methanol, succinic anhydride, ethylene carbonate, pyridine, formamide, and dimethyl sulfone.

In addition, the polar solvent used in the above second step may be a mixed solvent in which the polar solvent as described above is mixed with another solvent.

When water is used as the polar solvent, the appropriate pH is also different depending on the material inserted between the graphene layers. Basically, it is desired that the water is alkaline when an anionic compound is inserted, and the water is acidic when a cationic compound is inserted. Thus, exfoliation can be promoted much more effectively.

In the present invention, the first step of immersing the raw material graphite in the hydrophobic solvent and the following second step of immersing the raw material graphite in the polar solvent are carried out as described above. In other words, two-stage immersion treatment is performed. Thus, the distance between the graphene layers can be effectively increased to obtain expanded graphite. The expanded graphite obtained in this manner is also one aspect of the present invention.

The temperature of the contact with the polar solvent in the second step is not particularly limited and may be from normal temperature to a temperature equal to or lower than the boiling point of the polar solvent. However, the immersion temperature is preferably high. Thus, the distance between the graphene layers can be increased more rapidly.

The above polar solvent is preferably a solvent comprising water. Thus, exfoliation can be effectively performed.

When a series of the operations of the first step and the second step described here are repeated, the degree of exfoliation can be further increased.

(Method for Producing Exfoliated Graphite)

In the method for producing exfoliated graphite according to the present invention, exfoliation treatment is performed on expanded graphite obtained by the above method for producing expanded graphite. As the exfoliation treatment, at least one of ultrasonic treatment, mechanical shear treatment, and heat treatment can be used. However, the exfoliation treatment is not particularly limited.

In the case of ultrasonic treatment, the expanded graphite swollen in the polar solvent may be irradiated with ultrasonic waves as it is. Therefore, a solution in which graphene or exfoliated graphite is dispersed can be easily obtained.

In addition, in ultrasonic treatment, a polymer acting as a coupling agent or a dispersing agent may be added as a dispersing agent. Thus, a solution having high dispersion stability can be provided.

(Exfoliated Graphite and Graphite Foam)

According to the method for producing exfoliated graphite according to the present invention, exfoliated graphite is obtained by subjecting expanded graphite in which the distance between graphene layers is sufficiently increased to exfoliation treatment as described above. Therefore, exfoliated graphite having a BET specific surface area of 30 m²/g or more after drying can be provided. The exfoliated graphite obtained in this manner is also one aspect of the present invention. Such exfoliated graphite has a large BET specific surface area, and therefore, when a composite material is formed, the mechanical strength and the like can be sufficiently increased even if the amount of the exfoliated graphite is small.

Exfoliated graphite having a specific surface area of larger than 2000 m²/g is difficult to actually make.

In addition, in the above exfoliated graphite, it is preferred that the peak at 26.4° derived from between the graphite layers in the XRD spectrum is small or substantially absent. In this case, the distance between graphene layers is sufficiently increased, and the exfoliated graphite has a large specific surface area.

The graphite foam of the present invention is obtained as follows.

By performing the second step of the present invention on a graphite sheet, a sponge-like foam wet swollen to 150% or more, preferably 300% or more, more preferably 500% or more, and further preferably 1000% or more, compared with untreated graphite can be obtained. By drying the sponge-like foam, a graphite foam having light weight and having strength can be obtained.

In addition, the graphite foam can also be obtained by compressing the exfoliated graphite obtained in the present invention.

In the above graphite foam, the density after drying can also be 0.1 g/cc or less. In other words, a graphite foam having sufficiently low density can be obtained. Such a graphite foam has very low density, and therefore, a carbon material having excellent heat-insulating properties or a carbon material having excellent flexibility can be provided.

Advantageous Effects of Invention

According to the method for producing expanded graphite according to the present invention, by carrying out the first step of forming a complex of a compound serving as a charge acceptor for graphite in a hydrophobic solvent and bringing the complex into contact with raw material graphite, and the second step of bringing the raw material graphite in contact with the complex into contact with a polar solvent after the first step, that is, by a two-stage immersion method, expanded graphite in which the space between graphene layers are sufficiently increased can be obtained. In this case, in the above two-stage immersion method, the above hydrophobic solvent, the compound serving as a charge acceptor, and the polar solvent are used, and the expanded graphite can be safely mass-produced without using dangerous compounds such as alkali metals.

In addition, the expanded graphite in which the space between graphene layers are sufficiently increased can be obtained, and therefore, graphene or exfoliated graphite can be easily provided by exfoliation treatment or the like. It is possible to increase the mass productivity of expanded graphite or exfoliated graphite and reduce cost.

The obtained exfoliated graphite is hardly oxidized. Exfoliated graphite having excellent electrical conductivity and thermal conductivity can be obtained. In addition, by compounding the exfoliated graphite with a resin, it is also easy to provide a composite material having a high elastic modulus and being tough.

In addition, in the present invention, it is also possible to leave the above compound serving as a charge acceptor on the graphite surface. In this case, by selecting the compound serving as a charge acceptor, it is also possible to also increase solvent dispersibility.

The exfoliated graphite obtained in the present invention has excellent dispersibility in polar solvents such as water. In addition, modification is also easy. Therefore, the exfoliated graphite can be preferably used as a filler added to a resin. Thus, the improvement of the mechanical strength and elastic modulus of the resin can be easily promoted.

High temperature heating, vacuum treatment, or the like is not necessarily required. Therefore, scale-up is easy, and therefore, the mass productivity of exfoliated graphite can be effectively increased.

Brief Description of Drawings

[Figure 1] Figure 1 is a diagram showing the XRD spectra of an expanded graphite sheet (manufactured by TOYO TANSO CO., LTD., PF-100 UHP) used as a raw material in Example 1, an expanded graphite obtained in Example 1, an expanded graphite obtained in Example 2, and an expanded graphite obtained in Comparative Example.

[Figure 2] Figure 2 is a diagram showing the XRD spectra of an expanded graphite sheet (manufactured by TOYO TANSO CO., LTD., PF-100 UHP) used as a raw material in Example 4 and expanded graphite obtained in Examples 4 to 9.

Description of Embodiments

[Evaluation Methods]

Supplied Examples and Comparative Example were evaluated using any of the following evaluation methods 1) to 5).

Evaluation Method 1): XRD Measurement

X-ray diffraction measurement was performed using an X-ray diffraction apparatus Rint1000 manufactured by Rigaku.

Diffraction was obtained by a $2\theta$-$\theta$ method with a tube voltage of 50 kV and a tube current of 150 mA using Cu for the target. Scanning was performed at a rate of 3 degrees/min using a scintillation counter for the detector.

When the test substance was a dispersion solution containing graphite, it was mounted on a slide glass and dried at room temperature, and then, XRD measurement was performed.

For Examples 4 to 9, the measurement was performed using an X-ray diffraction apparatus Smart Lab manufactured by Rigaku. Diffraction was obtained by a $2\theta$-$\theta$ method with a tube voltage of 40 kV and a tube current of 80 mA using Cu for the target. Scanning was performed at a rate of 4 degrees/min using a scintillation counter for the detector.

Evaluation Method 2): 26.4° X-Ray Peak Ratio

According to the production method of the present invention, in X-ray diffraction measurement, a peak positioned at 26.4 degrees derived from the layer crystal of graphite that is a raw material decreases with the progress of exfoliation. This principle was used for a measure of the degree of exfoliation of graphite.

For a graphite sheet having a thickness of around 1 mm or graphite that is a standard, peak intensity at 26.4° is measured according to the evaluation method 1), and it is peak A. The graphite sheet or graphite is swollen by the two-stage immersion treatment of the present invention, and the swollen sheet or graphite is dried. Also for the sample, peak intensity at 26.4° is measured according to the evaluation method 1). It is peak B.

```
B/A × 100 was taken as the X-ray peak ratio of the sample.
```

Evaluation Method 3): BET Measurement Method

For a specific surface area measurement sample of exfoliated graphite obtained by performing exfoliation treatment after the two-stage immersion treatment of the present invention, the surface area was measured by a specific surface area measuring apparatus ASAP-2000 manufactured by SHIMADZU CORPORATION using a nitrogen gas. For Examples 4 to 9, BET measurement was performed after heat treatment was performed at 500°C for 2 hours.

Evaluation Method 4) Wet Swelling Ratio Measurement

The thickness of a graphite sheet before treatment is measured by vernier caliper and is thickness A. For a swollen sheet obtained by subjecting the graphite sheet to the two-stage immersion treatment of the present invention, extra moisture is removed using KIMTOWEL, and then, its thickness is measured by vernier caliper and is thickness B.

```
B/A × 100 was taken as the wet swelling ratio of the sample.
```

Evaluation Method 5) Density Measurement

A graphite sheet in a wet state is dried, and the weight A (g) of the obtained graphite foam is measured, and then, the length, width, and height (mm) are measured by vernier caliper, and the volume B (mm$^3$) is calculated.

A/B x 1000 is taken as the density (g/cm$^3$) of the sample.

The present invention will be described in more detail below by giving specific Examples and Comparative Example of the present invention. The present invention is not limited to the following Examples.

[Example 1]

2 g of aluminum chloride (manufactured by Wako Pure Chemical Industries, Ltd.) as a charge acceptor type compound, 10 g of toluene (manufactured by Wako Pure Chemical Industries, Ltd.) as a solvent, and a piece of an expanded graphite sheet (manufactured by TOYO TANSO CO., LTD., trade name "PF-100 UHP") cut to 1.5 cm x 1.5 cm were placed in a sample tube, and ultrasonic treatment was performed at a frequency of 28 kHz for 30 minutes x eight times using an ultrasonic cleaner (manufactured by VELVO-CLEAR, model "VS-100III"). Then, after aging at room temperature for 1 week (the first step), the sheet piece was removed and washed with toluene. The washed sheet piece was air-dried, and then, the sheet piece was cut into halves to obtain two sheet pieces having a 1/2 size. The sheet pieces were immersed in water for 1 week (the second step) to obtain two expanded graphites. The thickness of the obtained swollen graphite was measured, and the wet swelling ratio was obtained. One of the swollen graphites was placed in a sample tube containing 10 g of THF, and ultrasonic treatment was performed at a frequency of 28 kHz for 30 minutes x six times to obtain exfoliated graphite. The remaining one expanded graphite was dried under reduced pressure as it was without performing exfoliation treatment, to obtain a graphite foam.

[Example 2]

Operations were performed as in Example 1 except that the solvent was changed from toluene to methyl ethyl ketone.

[Example 3]

2 g of aluminum chloride (manufactured by Wako Pure Chemical Industries, Ltd.) as a charge acceptor type compound, 10 g of toluene (manufactured by Wako Pure Chemical Industries, Ltd.) as a solvent, and a piece of an expanded graphite sheet (manufactured by TOYO TANSO CO., LTD., trade name "PF-100 UHP") cut to 1.5 cm x 1.5 cm were placed in a sample tube, and ultrasonic treatment was performed at a frequency of 28 kHz for 30 minutes x eight times using an ultrasonic cleaner (manufactured by VELVO-CLEAR, model "VS-100III"). Then, after aging at room temperature for 2 weeks (the first step), the sheet piece was removed and washed with toluene. The washed sheet piece was air-dried, and then, the sheet piece was cut into halves to obtain two sheet pieces having a 1/2 size. The sheet pieces were immersed in 25% ammonia water for 3 days (the second step) to obtain two expanded graphites. Subsequent operations were performed as in Example 1.

[Example 4]

2 g of aluminum chloride (manufactured by Wako Pure Chemical Industries, Ltd.) as a charge acceptor type compound, 10 g of diphenyl ether (manufactured by Wako Pure Chemical Industries, Ltd.) as a solvent, and a piece of an expanded graphite sheet (manufactured by TOYO TANSO CO., LTD., trade name "PF-100 UHP") cut to 1.5 cm x 1.5 cm were placed in a sample tube, and ultrasonic treatment was performed at a frequency of 28 kHz for 30 minutes x 10 times using an ultrasonic cleaner (manufactured by VELVO-CLEAR, model "VS-100III"). Then, after aging at room temperature for 8 days (the first step), the sheet piece was removed and washed with toluene. The washed sheet piece was air-dried, and then, the sheet piece was cut into halves to obtain two sheet pieces having a 1/2 size. The sheet pieces were immersed in 25% ammonia water for 12 days (the second step) to obtain two expanded graphites. Subsequent operations were performed as in Example 1.

[Example 5]

Operations were performed as in Example 4 except that the solvent was changed from diphenyl ether to phenoxytoluene.

[Example 6]

Operations were performed as in Example 4 except that the solvent was changed from diphenyl ether to methoxybenzene.

[Example 7]

Operations were performed as in Example 6 except that the charge acceptor type compound was changed from aluminum chloride to iron chloride.

[Example 8]

Operations were performed as in Example 7 except that the solvent was changed from methoxybenzene to MEK.

[Example 9]

Operations were performed as in Example 7 except that the solvent was changed from methoxybenzene to nitromethane, and 2 g of iron chloride was changed to 4 g.

[Comparative Example]

Operations were performed as in Example 1 except that THF was used as the solvent instead of toluene.

(Evaluation Results)

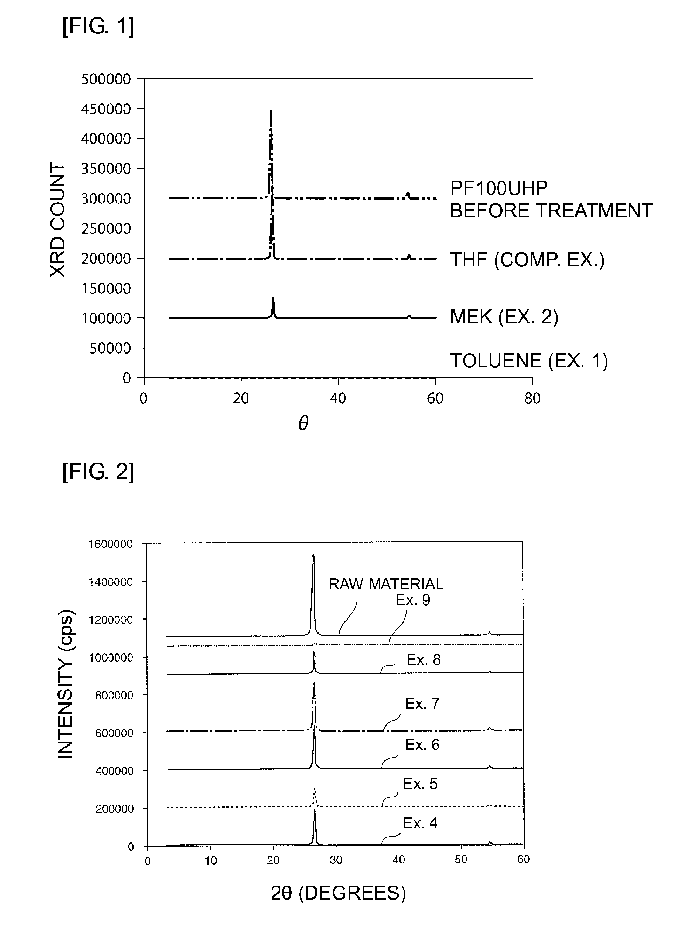

The evaluation results of Examples 1 to 9 and Comparative Example are shown in the following Table 1. Figure 1 is a diagram showing the XRD spectra of the expanded graphite sheet (manufactured by TOYO TANSO CO., LTD., PF-100 UHP) used as a raw material in Example 1, the expanded graphite obtained in Example 1, the expanded graphite obtained in Example 2, and the expanded graphite obtained in Comparative Example. Figure 2 is a diagram showing the XRD spectra of the expanded graphite sheet (manufactured by TOYO TANSO CO., LTD., PF-100 UHP) used as a raw material in Example 4 and the expanded graphites obtained in Examples 4 to 9.

As is clear from Figure 1 and Figure 2, it is found that the peak at 26° derived from graphite is hardly seen in Example 1 and is significantly small also in Example 2. Therefore, it is found that according to Example 1 and Examples 2 and 4 to 9, the distance between graphene layers is increased compared with Comparative Example.

[Table 1]

|  | XRD | Swelling | Density | BET |
|---|---|---|---|---|
| Ex. 1 | 1.1 | 988 | 0.22 | 11.9 |
| Ex. 2 | 23.82 | 300 | 0.664 | 9.5 |
| Ex. 3 | - | 1777 | 0.093 | 23.1 |
| Ex. 4 | 43.89 | 174 | 0.666 | 31.6 |
| Ex. 5 | 22.87 | 357 | 0.419 | 37.7 |
| Ex. 6 | 54.03 | 480 | 0.183 | 38.7 |
| Ex. 7 | 27.43 | 151 | 0.499 | 27.9 |
| Ex. 8 | 62.16 | 185 | 0.623 | 27.7 |
| Ex. 9 | 1.74 | 151 | 0.499 | 44.2 |
| Comp.Ex. | 91.06 | 143 | 0.828 | - |

**Claims**

1. A method for producing expanded graphite, comprising:

   a first step of bringing a complex of a compound serving as a charge acceptor for graphite into contact with raw material graphite in a hydrophobic solvent; and
   a second step of bringing the raw material graphite in contact with the complex into contact with a polar solvent after the first step.

2. The method for producing expanded graphite according to claim 1, wherein a solubility parameter of the hydrophobic solvent is 12 or less.

3. The method for producing expanded graphite according to claim 2, wherein the hydrophobic solvent is a solvent comprising a compound having an aromatic ring.

4. The method for producing expanded graphite according to claims 1 to 3, wherein the hydrophobic solvent comprises a compound having an aromatic functional group in a molecule as an essential component.

5. The method for producing expanded graphite according to any one of claims 1 to 4, wherein the polar solvent used in the second step comprises a compound having a solubility parameter of more than 12.

6. The method for producing expanded graphite according to claim 5, wherein the polar solvent comprises a compound having a solubility parameter of 12.5 or more.

7. The method for producing expanded graphite according to claim 6, wherein the polar solvent comprises a compound having a solubility parameter of 14 or more.

8. The method for producing expanded graphite according to any one of claims 1 to 7, wherein the polar solvent is a solvent comprising water as an essential component.

9. The method for producing expanded graphite according to any one of claims 1 to 8, wherein in the first step, the complex of the compound serving as a charge acceptor for graphite is formed in the hydrophobic solvent, and the complex is brought into contact with the raw material graphite.

10. The method for producing expanded graphite according to any one of claims 1 to 8, wherein in the first step, the complex of the compound serving as a charge acceptor for graphite is dissolved in the hydrophobic solvent and brought into contact with the raw material graphite in the hydrophobic solvent.

11. The method for producing expanded graphite according to any one of claims 1 to 10, wherein at least one compound selected from the group consisting of (1) a metal halide represented by MXn, (2) a composite salt represented by MAX, (3) a complex compound represented by ML or MLX, (4) an organic compound having an ability to form a CT complex with an aromatic compound, and (5) a trivalent phosphorus compound is used as the compound serving as a charge acceptor for graphite (wherein in (1) to (3), M is a metal of groups 2 to 7 of a periodic table, X is a halogen, A is an acid, n is an integer of 2 to 5, and L is a compound serving as a ligand).

12. The method for producing expanded graphite according to claim 11, wherein the compound serving as a charge acceptor for graphite is a compound having a structure of the MXn or a compound having a structure of the MLX, and the compound having a structure of MLX is a compound having a structure of MLaXb (wherein a and b are each an integer of 1 to 4).

13. A method for producing exfoliated graphite, comprising performing exfoliation treatment on expanded graphite obtained by the method for producing expanded graphite according to any one of claims 1 to 12.

14. The method for producing exfoliated graphite according to claim 13, wherein the exfoliation treatment is at least one of ultrasonic treatment, mechanical shear treatment, and heat treatment.

15. Expanded graphite obtained by the method for producing expanded graphite according to any one of claims 1 to 12.

16. Exfoliated graphite obtained by the method for producing exfoliated graphite according to claim 13 or 14.

[FIG. 1]

[FIG. 2]

## INTERNATIONAL SEARCH REPORT

| International application No. |
| --- |
| PCT/JP2013/075505 |

**A. CLASSIFICATION OF SUBJECT MATTER**
*C01B31/04*(2006.01)i

According to International Patent Classification (IPC) or to both national classification and IPC

**B. FIELDS SEARCHED**

Minimum documentation searched (classification system followed by classification symbols)
C01B31/00-31/36

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus(STN), Science Direct, Scopus, JSTPlus/JMEDPlus/JST7580(JDreamIII), WPI, CiNii

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | H. SHIOYAMA et al., Additives necessary for the preparation of AlCl$_3$-GIC from vapour and liquid phases, Synthetic Metals, 1994, Vol.64, pp.97-100 | 1,2,5-12,15<br>3,4,13,14,16 |
| Y | JP 2011-144054 A (Toyota Central Research and Development Laboratories, Inc.), 28 July 2011 (28.07.2011), claims 1 to 5 (Family: none) | 3,4 |
| Y | WO 2012/073861 A1 (Sekisui Chemical Co., Ltd.), 07 June 2012 (07.06.2012), paragraphs [0075] to [0077]<br>& JP 5048873 B2 & JP 2013-100212 A<br>& CN 103189312 A & TW 201228933 A | 13,14,16 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 October, 2013 (03.10.13) | 15 October, 2013 (15.10.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/075505 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-213583 A  (Sekisui Chemical Co., Ltd.),<br>27 October 2011 (27.10.2011),<br>claims 1 to 6<br>(Family: none) | 1-16 |
| A | JP 62-265112 A  (Nippon Steel Corp.),<br>18 November 1987 (18.11.1987),<br>claims<br>& US 4795591 A          & EP 246037 A2<br>& DE 3764019 D | 1-16 |
| A | JP 2010-535690 A  (Centre National de la<br>Recherche Scientifique (CNRS)),<br>25 November 2010 (25.11.2010),<br>claims<br>& US 2011/0130494 A1     & EP 2176164 A2<br>& WO 2009/056696 A2      & FR 2919856 A1 | 1-16 |
| A | M. INAGAKI et al., Intercalation into graphite<br>of metal chlorides from organic solutions,<br>Journal de chimie physique, 1987, Vol.84, Nos.<br>11-12, pp.1439-1442 | 1-16 |
| A | Y. MIZUTANI et al., Graphite intercalation<br>compounds prepared in solutions of alkali<br>metals in 2-methyltetrahydrofuran and 2,5-<br>dimethyltetrahydrofuran, Carbon, 1997, Vol.35,<br>No.1, pp.61-65 | 1-16 |
| A | Gadi LIPINER et al., Porphyrin metallation by<br>graphite-metal intercalates: a model for the<br>occurrence of metalloporphyrins in coal,<br>Journal of the Chemical Society, Chemical<br>Communications, 1987, No.1, pp.34-35 | 1-16 |

Form PCT/ISA/210 (continuation of second sheet) (July 2009)

# EP 2 905 256 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010535690 A

- JP 2011144054 A

### Non-patent literature cited in the description

- **D. GINDEROW ; R. SETTON.** *C. R. Acad. Sci. Palis,* 1963, vol. 257, 687